# FASCICULE DE BREVET EUROPEEN

(11) **EP 0 354 862 B1**
(45) Date de publication et mention de la délivrance du brevet: **20.01.1993**
(21) Numéro de dépôt: 89440071.2
(22) Date de dépôt: 12.07.1989
(51) Int. Cl.: A01D 84/00

(54) **Machine pour déplacer des végétaux couchés sur le sol**
Maschine zum Versetzen von auf dem Boden liegendem Pflanzengut
Machine for displacing plants lying on the soil

(30) Priorité: 11.08.1988 FR 8810967
(43) Date de publication de la demande: 14.02.1990
(73) Titulaire: KUHN S.A., F-67700 Saverne (FR)
(72) Inventeur: Carree, Francis, F-22600 Loudeac (FR)
(74) Mandataire: Andres, Jean-Claude

(56) Documents cités:
- WO-A-85/00088
- BE-A- 485 672
- DE-B- 1 110 458
- DE-U- 8 600 242
- FR-A- 2 334 286
- FR-A- 2 437 771
- FR-A- 2 522 469

## Description

La présente invention se rapporte à une machine pour l'andainage, le retournement d'andains ou le fanage, comportant un bâti portant un dispositif de déplacement de végétaux sur le sol au moyen d'air produit par un ventilateur dans une gaine ou un conduit analogue, laquelle gaine est au moins partiellement entourée par un déflecteur d'orientation des végétaux qui se compose d'une paroi supérieure qui est sensiblement horizontale et de parois qui s'étendent de ladite paroi supérieure pratiquement jusqu'au sol.

Une telle machine est connue dans la demande de brevet WO-A-8500088. Sur cette machine, la partie inférieure de la gaine est évasée. Elle dirige l'air produit par le ventilateur vers le sol, suivant une direction faiblement inclinée par rapport à la surface dudit sol. De ce fait, les végétaux coupés sont plaqués au sol et sont pratiquement poussés dans les pieds non coupés de ces végétaux. Par conséquent, le déplacement et la séparation de ces végétaux sont généralement très difficiles, surtout lorsqu'ils sont denses et lourds. La machine passe alors souvent par dessus ces végétaux sans les déplacer.

La présente invention a pour but de proposer une machine avec un dispositif de déplacement de végétaux par air, n'ayant pas les inconvénients précités de la machine connue.

A cet effet, une importante caractéristique de l'invention consiste en ce que la machine comporte plusieurs ventilateurs monté chacun dans une gaine qui s'étend dans sa direction longitudinale uniquement verticalement, que les gaines sont disposées suivant une ou plusieurs ligne(s) oblique(s) par rapport au sens d'avancement et, qu'une paroi du déflecteur se situe derrière toutes les gaines et une autre paroi dudit déflecteur se situe à l'avant, à une certaine distance de ces gaines et forme avec celles-ci un canal avec une ouverture, dans lequel se déplacent les végétaux.

Les jets d'air provenant des ventilateurs arrivent plus ou moins verticalement sur les végétaux. L'air passe alors entre le sol et lesdits végétaux, soulève ces derniers, les sépare et les déplace selon le travail recherché. Le déflecteur d'orientation canalise le flux d'air vers l'endroit où les végétaux doivent être déposés sur le sol.

Dans le cas où la machine selon l'invention comporte des gaines disposées suivant une ligne oblique par rapport au sens d'avancement, les végétaux sont déplacés latéralement d'une gaine d'arrivée d'air vers l'autre jusqu'à l'ouverture prévue dans le déflecteur. On obtient ainsi une importante largeur de travail.

Dans le cas où la machine selon l'invention comporte plusieurs gaines disposées sur deux lignes obliques formant un V dont la pointe est dirigée vers l'arrière, les végétaux sont déplacés d'une gaine d'arrivée d'air vers l'autre, jusqu'à la pointe du V et, sont déposés sur un andain central.

Le déplacement des végétaux, notamment lorsqu'ils sont denses et/ou lourds, suivant la ligne oblique ou les lignes obliques en forme de V, selon la disposition des gaines d'arrivée de l'air, est amélioré au moyen d'ouvertures latérales prévues dans ces gaines. Ces ouvertures sont dirigées dans la direction de déplacement. L'air sortant par ces ouvertures renforce le flux d'air qui transporte les végétaux, de sorte qu'il ne se produise pas d'accumulation de végétaux devant ou entre les gaines.

D'autres caractéristiques et avantages de l'invention ressortiront des revendications et de la description ci-après d'exemples de réalisation non limitatifs de l'invention, avec référence aux dessins annexés dans lesquels:
- La figure 1 représente une vue de dessus d'une machine selon l'invention ;
- La figure 2 représente une vue de dessus d'un autre exemple de réalisation d'une machine selon l'invention;
- La figure 3 représente schématiquement et à plus grande échelle, une coupe verticale d'un dispositif de déplacement selon l'invention ;
- La figure 4 représente une vue de dessus du dispositif de la figure 3.

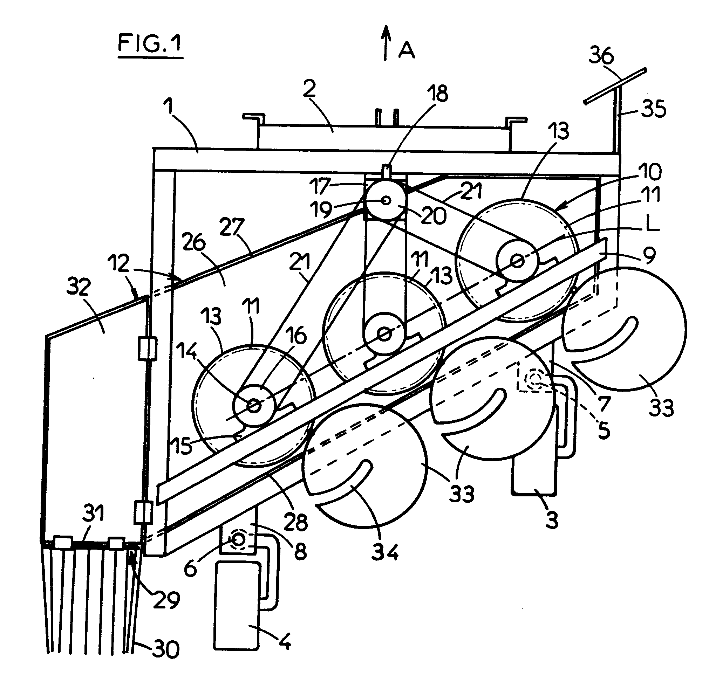

Telle qu'elle est représentée sur la figure 1, la machine selon l'invention comporte un bâti (1) réalisé au moyen de poutrelles. Ce bâti (1) est muni d'un dispositif d'attelage trois points (2) pour l'accouplement au dispositif de relevage d'un tracteur d'entraînement non représenté. Sur le côté opposé à celui où se trouve le dispositif d'attelage (2), ledit bâti comporte deux roulettes (3 et 4) qui se déplacent sur le sol durant le travail. Ces roulettes (3 et 4) sont fixées sur des colonnes (5 et 6) qui sont logées de manière pivotante dans des paliers (7 et 8) solidaires du bâti (1). Lesdites roulettes peuvent être déplacées le long des colonnes (5 et 6) et être arrêtées dans différentes positions au moyen de vis de blocage.

Le bâti (1) comporte également une traverse (9) portant le dispositif de déplacement (10). Dans l'exemple représenté, celui-ci se compose de trois ventilateurs (11). Ce nombre peut varier en fonction de la largeur de travail recherchée. Ledit bâti (1) porte en sus un déflecteur (12) qui oriente les végétaux déplacés.

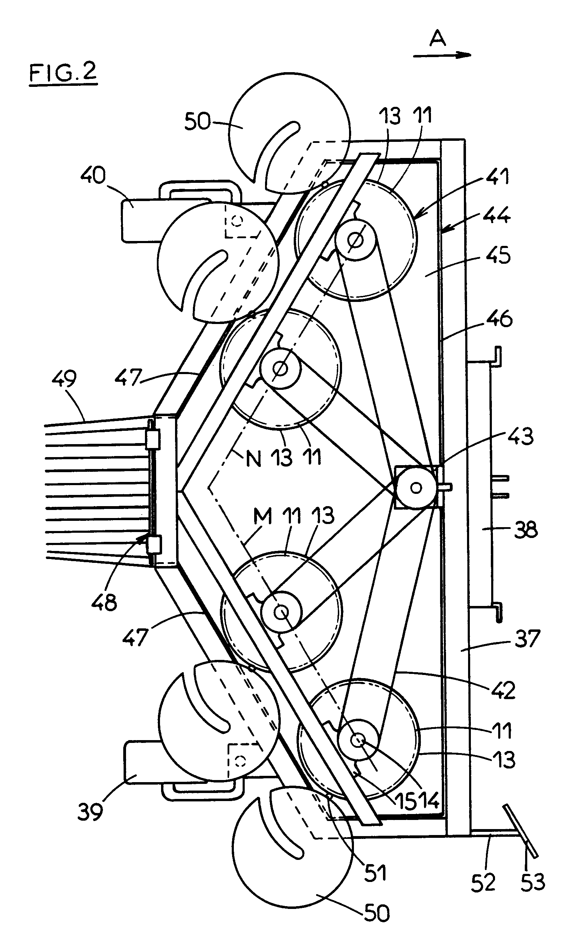

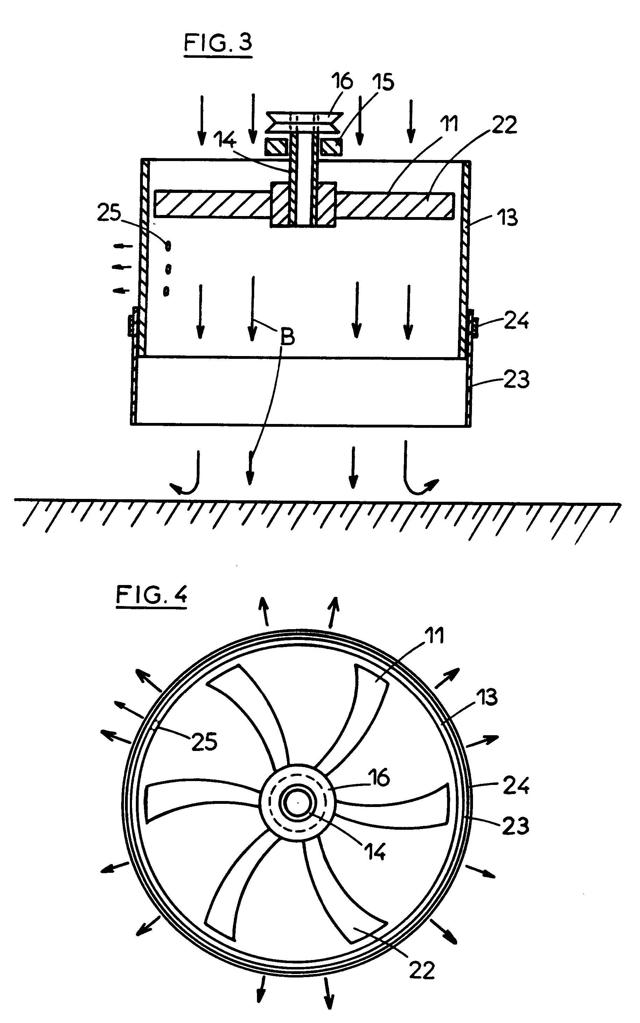

On voit sur les figures 3 et 4 que chaque ventilateur (11) est monté dans une gaine (13) ou un conduit analogue. Il est fixé sur un arbre (14) pratiquement vertical. Cet arbre (14) est guidé de manière à pouvoir tourner sur lui-même dans un palier (15) fixé sur la traverse (9) du bâti (1). Il porte près de son extrémité supérieure une poulie (16) pour l'entraînement en rotation du ventilateur (11). Cet entraînement est assuré à partir d'un carter de distribution (17) prévu sur le bâti (1) (voir figures 1 et 2). Ce carter (17) comporte un arbre d'entrée (18) qui est dirigé vers l'avant et un arbre de sortie (19) qui est dirigé vers le haut et porte une poulie (20). L'arbre d'entrée (18) est destiné à être relié à l'arbre de prise de force du tracteur par l'intermédiaire d'un arbre à cardans. La poulie (20) de l'arbre de sortie (19) est reliée à la poulie (14) de chaque ventilateur (11) au moyen de courroies de transmission (21).

Chaque ventilateur (11) présente des pales (22) pour souffler de l'air dans le sens des flèches (B). Ces pales (22) sont orientables afin de pouvoir régler le débit de l'air soufflé. Dans le même but, la vitesse de rotation du ventilateur peut être augmentée ou diminuée.

La gaine (13) de chaque ventilateur (11) est circulaire. Son diamètre correspond à peu près à celui du ventilateur (11) correspondant. Il pourra donc varier en fonction de celui dudit ventilateur. Cette gaine (13) est dirigée sensiblement perpendiculairement vers la surface du sol. Elle s'étend dans sa direction longitudinale uniquement verticalement.

Chaque gaine (13) comporte à son extrémité inférieure un manchon (23) qui est fixé sur elle au moyen d'un collier de serrage (24). Ce manchon (23) peut être déplacé le long de la gaine (13) et être immobilisé dans différentes positions à l'aide dudit collier. Ceci permet de modifier sa distance par rapport au sol. De cette manière, l'opérateur peut régler l'arrivée de l'air et l'adapter à la nature et à la quantité des végétaux à déplacer. Ce manchon (23) peut être réalisé en une matière flexible tel que du caoutchouc. De ce fait, il ne risque pas d'être détérioré en cas de rencontre avec un obstacle qui peut se trouver à la surface du sol.

Chacune de ces gaines (13) comporte plusieurs ouvertures latérales (25) dans sa paroi. Ces ouvertures (25) sont de petite dimension. Elles se situent les unes au-dessus des autres et sont orientées dans la direction vers laquelle sont dirigés les végétaux déplacés durant la travail.

Les gaines (13) d'arrivée de l'air des trois ventilateurs (11) de la machine représentée sur la figure 1 sont disposées suivant une ligne (L) oblique par rapport au sens d'avancement (A). Cette ligne (L) forme avec ledit sens d'avancement un angle dont la valeur est comprise entre 110° et 150°.

Le déflecteur d'orientation (12) s'étend autour des parties inférieures desdites gains (13). Il se compose notamment d'une paroi supérieure (26) et de parois latérales (27 et 28). La paroi supérieure (26) est sensiblement horizontale et se situe à une distance d'environ 50 à 60 centimètres du sol durant le fonctionnement. Elle est traversée par les gaines (13). Les parois latérales (27 et 28) s'étendent de la paroi supérieure (260 pratiquement jusqu'au sol. Elles sont avantageusement réalisées en une matière flexible telle que du caoutchouc pour éviter des détériorations en cas de rencontre avec un obstacle. La paroi (28), qui se situe derrière les gaines (13), est pratiquement parallèle à la ligne oblique (L). Par contre, la paroi (27) qui est à l'avant de ces gaines (13) -vu dans le sens d'avancement (A)- se situe à une certaine distance desdites gaines (13) et s'en éloigne au fur et à mesure qu'elle se dirige vers l'arrière de la machine. Entre les gaines (13) et cette paroi avant (27) du déflecteur (12) est créé un canal dans lequel se déplacent les végétaux.

La partie la plus en arrière du déflecteur (12) comporte une ouverture (29) permettant aux végétaux de sortir du canal précité sous la forme d'un andain. Autour de cette ouverture sont prévues des tiges de guidage (30) en acier à ressort. Elles sont appliquées sur les végétaux afin qu'elles empêchent leur dispersion. Les tiges (30) qui se situent à la partie supérieure de l'ouverture (29) sont reliées à un support (31) qui est articulé sur la paroi supérieure (26) du déflecteur (12). Ce montage autorise un important débattement de ces tiges, en vue d'une bonne adaptation au volume des végétaux déplacés.

Le déflecteur (12) comporte une partie latérale (32) indépendante et qui est articulée sur le bâti (1). Elle peut ainsi être basculée vers le haut pour réduire la largeur de la machine au transport et/ou pour agrandir la sortie des végétaux en vue d'effectuer un travail de fanage.

A la partie supérieure des gaines (13) sont prévus des volets d'obturation (33). Ils sont constitués par des disques articulés sur les gaines (13) et ayant un diamètre sensiblement égal à celui desdites gaines. Ils comportent en sus une découpe (34) pour le passage des arbres (14) des ventilateurs (11). Ces disques peuvent être amenés au-dessus des gaines (13) afin d'empêcher l'arrivée d'air lors des petites interruptions de travail ne nécessitant pas un arrêt complet de l'entraînement des ventilateurs (11). Ils peuvent aussi servir à la protection des ventilateurs lorsque la machine n'est pas utilisée.

Le bâti (1) comporte encore sur son côté du ventilateur le plus en avant un bras (35) porteur d'une roue ou d'un disque de séparation (36). Cette roue est inclinée par rapport au sens d'avancement (A). Au travail, elle roule sur le sol et sépare les végétaux situés sur la trajectoire de la machine de ceux restant encore étalés sur le sol.

La machine selon la figure 2 comporte un bâti (37) de forme essentiellement rectangulaire. Il possède à l'avant un dispositif d'accouplement trois points (38) et à l'arrière des roulettes (39 et 40) pivotantes et réglables en hauteur. Le dispositif de déplacement (41) des végétaux coupés se compose de quatre gaines (13) ayant chacune un ventilateur (11).

Ces gaines (13) sont disposées par paire sur des lignes (M et N) formant un V dont la pointe est dirigée vers l'arrière -vu dans le sens d'avancement (A). Les gaines (13) et les ventilateurs (11) sont semblables à ceux décrits en liaison avec la machine selon la figure 1 et ne seront plus décrites en détail. Les quatre ventilateurs (11) sont aussi entraînés en rotation au moyen de courroies (42) à partir d'un carter de distribution (43) prévu sur le bâti (37). Les parties inférieures des gaines (13) d'arrivée de l'air sont entourées par un déflecteur d'orientation (44) formé notamment par une paroi sensiblement horizontale (45), une paroi avant (46) et une paroi arrière (47). La paroi (45) se situe à une distance d'environ 50 à 60 centimètres au-dessus du sol et est traversée par les gaines (13). La paroi avant (46) est sensiblement perpendiculaire au sens d'avancement (A), alors que la paroi arrière (47) est sensiblement parallèle aux lignes (M et N) et forme également un V. Dans la pointe de ce V est prévue une ouverture (48) pour la sortie des végétaux déplacés. Autour de cette ouverture (48) sont disposées des tiges de guidage (49) pour façonner l'andain en formation.

L'extrémité supérieure de chaque gaine (13) est équipée d'un volet d'obturation (50) qui est déplaçable autour de son axe d'articulation (51).

Enfin, au moins un des côtés du bâti (37) est muni d'un bras (52) qui porte une roue ou un disque de séparation (53) pour séparer les végétaux situés sur la trajectoire de la machine de ceux restant encore étalés sur le sol.

Durant le travail, la machine selon la figure 1 est déplacée sur le sol au moyen d'un tracteur. Les ventilateurs (11) de son dispositif de déplacement (10) sont entraînés en rotation et soufflent de l'air sensiblement verticalement vers le sol. Ces jets d'air sont quasiment brisés et renvoyés vers le haut par le sol. Ils soulèvent alors tous les végétaux étalés sur le sol et les entraînent vers l'ouverture (29) située sur le côté le plus en arrière de la machine. Le débit et la puissance des jets peuvent être réglés en fonction de la nature et de la quantité des végétaux.

Le déflecteur (12) canalise le flux d'air et guide les végétaux vers l'ouverture (29). Ce flux est en sus renforcé et dirigé par l'air passant par les ouvertures latérales (25) des gaines (13). Cet air empêche également les végétaux de s'engager entre deux gaines (13) voisines.

Lorsque la partie indépendante (32) du déflecteur (12) est abaissée, tel que représenté sur la figure 1, les végétaux déplacés sont rassemblés et déposés sous la forme d'un andain. Cette disposition du déflecteur permet aussi de déplacer latéralement et de retourner des andains préalablement formés.

Lorsque cette partie indépendante (32) est déplacée vers le haut, les végétaux sortent plus librement de sous le déflecteur (12). Ils sont alors simplement déplacés, retournés et à nouveau étalés sur le sol afin d'accélérer leur séchage.

Au travail, la machine de la figure 2 est également déplacée au moyen d'un tracteur. L'air soufflé par les ventilateurs (11) de son dispositif de déplacement (41) est alors canalisé vers le milieu de la machine et il entraîne les végétaux vers l'ouverture (48) de la paroi (47) du déflecteur (44). Dans ce cas, la machine forme un andain central.

Le procédé de déplacement pneumatique de végétaux qui est décrite ci-dessus peut également être employé sur des machines de récolte telles que des faucheuses, des presses, des moissonneuses ou des ensileuses.

Il est bien évident que l'invention n'est pas limitée aux modes de réalisation tels que décrits ci-dessus et représentés sur le dessins annexés. Des modifications restent possibles, notamment en ce qui concerne la constitution des divers éléments ou par substitution d'équivalents techniques, sans pour autant sortir du domaine de protection défini dans les revendications.

## Revendications

1. Machine pour l'andainage, le retournement d'andains ou le fanage, comportant un bâti (1, 37) portant un dispositif de déplacement (10, 41) de végétaux sur le sol au moyen de l'air produit par un ventilateur (11) dans une gaine (13) ou un conduit analogue, laquelle gaine (13) est au moins partiellement entourée par un déflecteur (12, 44) d'orientation des végétaux qui se compose d'une paroi supérieure (26, 45) qui est sensiblement horizontale et de parois (27, 28, 46, 47) qui s'étendent de ladite paroi supérieure (26, 45) pratiquement jusqu'au sol, caractérisée par le fait qu'elle comporte plusieurs ventilateurs (11) monté chacun dans une gaine (13) qui s'étend dans sa direction longitudinale uniquement verticalement, que les gaines (13) sont disposées suivant une ou plusieurs ligne(s) oblique(s) (L, M et N) par rapport au sens d'avancement (A) et, qu'une paroi (28, 47) du déflecteur (12, 44) se situe derrière toutes les gaines (13) et une autre paroi (27, 46) dudit déflecteur se situe à l'avant, à une certaine distance de ces gaines (13) et forme avec celles-ci un canal avec une ouverture (29, 48), dans lequel se déplacent les végétaux.

2. Machine selon la revendication 1, caractérisée par le fait que les gaines (13) d'arrivée de l'air sont disposées suivant une ligne oblique (L) formant un angle compris entre 110° et 150°, avec le sens d'avancement (A).

3. Machine selon la revendication 2, caractérisée par le fait que la paroi arrière (28) du déflecteur d'orientation (12) est sensiblement parallèle à la ligne (L) et aux gaines (13) et que la paroi avant (27) qui est située à une certaine distance desdites gaines s'en éloigne au fur et à mesure qu'elle se dirige vers le côté arrière de la machine.

4. Machine selon la revendication 3, caractérisée par le fait que le déflecteur d'orientation (12) comporte une ouverture (29) dans la partie la plus en arrière -vu dans le sens d'avancement (A)-.

5. Machine selon la revendication 1, caractérisée par le fait que les gaines (13) sont disposées sur des lignes (M et N) formant un V dont la pointe est dirigée vers l'arrière -vu dans le sens d'avancement (A)-.

6. Machine selon la revendication 5, caractérisée par le fait que le déflecteur d'orientation (44) comporte une paroi avant (46) sensiblement perpendiculaire au sens d'avancement (A) et une paroi arrière (47) parallèle aux lignes (M et N) et comportant une ouverture (48).

7. Machine selon l'une quelconque des revendications précédentes, caractérisée par le fait que la forme des gaines (13) d'arrivée de l'air peut varier.

8. Machine selon l'une quelconque des revendications précédentes, caractérisée par le fait que la distance entre le sol sur lequel se trouve les végétaux et l'extrémité inférieure des gaines (13) d'arrivée de l'air est réglable.

9. Machine selon la revendication 1 ou 8, caractérisée par le fait que l'extrémité inférieure des gaines (13) d'arrivée de l'air est constituée par un manchon (23).

10. Machine selon la revendication 8, caractérisée par le fait que le bâti (1, 37) comporte des roulettes (3, 4 ou 39, 40) réglables en hauteur.

11. Machine selon la revendication 9, caractérisée par le fait que le manchon (23) est réalisé en une matière flexible.

12. Machine selon l'une quelconque des revendications précédentes, caractérisée par le fait que les gaines (13) d'arrivée de l'air comportent des ouvertures latérales (25) dirigées dans la direction de déplacement des végétaux.

13. Machine selon la revendication 4 ou 6, caractérisée par le fait qu'autour de l'ouverture (29 ou 48) du déflecteur (12 ou 44) sont disposées des tiges de guidage (30 ou 49) appliquées sur les végétaux déplacés.

14. Machine selon la revendication 13, caractérisée par le fait que les tiges de guidage (30 ou 49) sont en acier à ressort.

15. Machine selon la revendication 13 ou 14, caractérisée par le fait que les tiges de guidage (30 ou 49) disposées au-dessus de l'ouverture (29 ou 48) sont montées sur un support articulé (31).

16. Machine selon l'une quelconque des revendications précédentes, caractérisée par le fait que le débit des ventilateurs (11) est variable.

17. Machine selon la revendication 16, caractérisée par le fait que les ventilateurs (11) comportent des pales (22) orientables.

18. Machine selon la revendication 16, caractérisée par le fait que la vitesse de rotation des ventilateurs (11) est variable.

19. Machine selon l'une quelconque des revendications précédentes, caractérisée par le fait qu'elle comporte des volets d'obturation (33, 50) permettant de fermer au moins partiellement les gaines (13) des ventilateurs (11).

20. Machine selon l'une quelconque des revendications précédentes, caractérisée par le fait qu'elle comporte un dispositif de séparation (36, 53) des végétaux, sur au moins un de ses côtés.

## Patentansprüche

1. Maschine zum Schwaden, Umdrehen von Schwaden oder Zettenwenden, umfassend ein Gestell (1, 37), das eine Vorrichtung (10, 41) zum Versetzen von Pflanzen auf dem Boden mittels Luftstrom aufweist, der von einem Ventilator (11) in einer Hülse (13) oder einem ähnlichen Rohr erzeugt wird, welche Hülse (13) zumindest teilweise von einem Abweiser (12, 44) zur Orientierung der Pflanzen umgeben ist, der sich aus einer oberen Wand (26, 45), die im wesentlichen horizontal ist, und Wänden (27, 28, 46, 47), die sich von der oberen Wand (26, 45) praktisch bis zum Boden erstrecken, zusammensetzt, dadurch gekennzeichnet, daß sie mehrere Ventilatoren (11) aufweist, die jeweils in einer Hülse (13) montiert sind, die sich in ihrer Längsrichtung ausschließlich vertikal erstreckt, daß die Hülsen (13) entlang einer oder mehrerer schrägen Linie(n) (L,M und N) in bezug auf die Fortbewegungsrichtung (A) angeordnet sind, und daß sich eine Wand (28, 47) des Abweisers (12, 44) hinter allen Hülsen (13) befindet und sich eine andere Wand (27, 46) des Abweisers an der Vorderseite in einem gewissen Abstand von den Hülsen (13) befindet und mit diesen einen Kanal mit einer Öffnung (29, 48) bildet, in welchem sich die Pflanzen verlagern.

2. Maschine nach Anspruch 1, dadurch gekennzeichnet, daß die Hülsen (13) für die Luftzufuhr entlang einer schrägen Linie (L) angeordnet sind, die einen Winkel zwischen 110 und 150° mit der Fortbewegungsrichtung (A) bildet.

3. Maschine nach Anspruch 2, dadurch gekennzeichnet, daß die Rückwand (28) des Orientierungsabweisers (12) im wesentlichen parallel zur Linie (L) und zu den Hülsen (13) ist und daß sich die vordere Wand (27), die sich in einem gewissen Abstand von den Hülsen befindet, von ihnen in dem Ausmaß entfernt, als sie zur Rückseite der Maschine ragt.

4. Maschine nach Anspruch 3, dadurch gekennzeichnet, daß der Orientierungsabweiser (12) eine Öffnung (29) im hintersten Teil - in Fortbewegungsrichtung (A) gesehen - hat.

5. Maschine nach Anspruch 1, dadurch gekennzeichnet, daß die Hülsen (13) auf den Linien (M und N) angeordnet sind, die ein V bilden, dessen Spitze nach hinten - gesehen in Fortbewegungsrichtung (A) - gerichtet ist.

6. Maschine nach Anspruch 5, dadurch gekennzeichnet, daß der Orientierungsabweiser (44) eine zur Fortbewegungsrichtung (A) im wesentlichen normale vordere Wand (46), und eine zu den Linien (M und N) parallele hintere Wand (47), die eine Öffnung (48) aufweist, umfaßt.

7. Maschine nach irgendeinem der vorhergehenden Ansprüche, dadurch gekennzeichnet, daß die Form der Hülsen (13) für die Luftzufuhr variieren kann.

8. Maschine nach irgendeinem der vorhergehenden Ansprüche, dadurch gekennzeichnet, daß der Abstand zwischen dem Boden, auf dem sich die Pflanzen befinden und dem unteren Ende der Hülsen (13) für die Luftzufuhr regelbar ist.

9. Maschine nach Anspruch 1 oder 8, dadurch gekennzeichnet, daß das untere Ende der Hülsen (13) für die Luftzufuhr aus einer Manschette (23) besteht.

10. Maschine nach Anspruch 8, dadurch gekennzeichnet, daß das Gestell (1, 37) höhenverstellbare Räder (3, 4 oder 39, 40) aufweist.

11. Maschine nach Anspruch 9, dadurch gekennzeichnet, daß die Manschette (23) aus einem flexiblen Material hergestellt ist.

12. Maschine nach irgendeinem der vorhergehenden Ansprüche, dadurch gekennzeichnet, daß die Hülsen (13) für die Luftzufuhr seitliche Öffnungen (25) aufweisen, die in die Richtung der Bewegung der Pflanzen gerichtet sind.

13. Maschine nach Anspruch 4 oder 6, dadurch gekennzeichnet, daß um die Öffnung (29 oder 48) des Abweisers (12 oder 44) Führungsstangen (30 oder 49) angeordnet sind, die auf die versetzten Pflanzen wirken.

14. Maschine nach Anspruch 13, dadurch gekennzeichnet, daß die Führungsstangen (30 oder 49) aus Federstahl bestehen.

15. Maschine nach Anspruch 13 oder 14, dadurch gekennzeichnet, daß die Führungsstangen (30 oder 49), die oberhalb der Öffnung (29 oder 48) angeordnet sind, an einer gelenkigen Halterung (31) montiert sind.

16. Maschine nach irgendeinem der vorhergehenden Ansprüche, dadurch gekennzeichnet, daß der Durchsatz der Ventilatoren (11) variabel ist.

17. Maschine nach Anspruch 16, dadurch gekennzeichnet, daß die Ventilatoren (11) orientierbare Blätter (22) umfassen.

18. Maschine nach Anspruch 16, dadurch gekennzeichnet, daß die Rotationsgeschwindigkeit der Ventilatoren (11) variabel ist.

19. Maschine nach irgendeinem der vorhergehenden Ansprüche, dadurch gekennzeichnet, daß sie Verschlußkappen (33, 50) aufweist, die ermöglichen, daß die Hülsen (13) der Ventilatoren (11) zumindest teilweise geschlossen werden.

20. Maschine nach irgendeinem der vorhergehenden Ansprüche, dadurch gekennzeichnet, daß sie eine Trennvorrichtung (36, 53) für die Pflanzen auf zumindest einer ihrer Seiten aufweist.

## Claims

1. Machine for windrowing, swath broadturning and tedding, comprising a frame (1,37) supporting a device (10, 41) for displacing plants lying on the soil by the means of air produced by a blower (11) in a tube (13) or an equivalent pipe, said tube (13) is at least partly surrounded by a deflector (12, 44) for the orientation of the plants which is provided with an upper wall (26, 45) which is approximately horizontal and walls (27, 28, 46, 47) extending from said upper wall (26, 45) nearly to the soil, characterized in that it comprises several blowers (11) each mounted in a tube (13) extending in its longitudinal direction only vertically, that the tubes (13) are arranged according to one or several oblique line(s) (L, M and N) with regard to the direction of advance (A) and, that one wall (28, 47) of the deflector (12, 44) is located behind all the tubes (13) and another wall (27, 46) of said deflector is located at the front, at a certain distance of these tubes (13) and forms with these a channel with an opening (29, 48), in which the plants displace.

2. Machine according to claim 1, characterized in that the air-inlet tubes (13) are arranged according to an oblique line (L) forming an angle comprised between 110° and 150° with the direction of advance (A).

3. Machine according to claim 2, characterized in that the rear side (28) of the orientation deflector (12) is approximately parallel to the line (L) and to the tubes (13) and that the front side (27) which is located at a certain distance from said tubes is moving away from it when moving to the rear side of the machine.

4. Machine according to claim 3, characterized in that the orientation deflector (12) comprises an opening (29) in its most rear part - seen in the direction of advance (A)-.

5. Machine according to claim 1, characterized in that the tubes (13) are arranged according to lines (M and N) forming a V, the point of which is directed to the rear -seen in the direction of advance (A)-.

6. Machine according to claim 5, characterized in that the orientation deflector (44) comprises a front wall (46) which is approximately perpendicular to the direction of advance (A) and a rear wall (47) parallel to the lines (M and N) and provided with an opening (48).

7. Machine according to anyone of the preceding claims, characterized in that the shape of the air-inlet tubes (13) can vary.

8. Machine according to anyone of the preceding claims, characterized in that the distance between the soil on which the plants are lying and the lower end of the air-inlet tubes (13) is adjustable.

9. Machine according to claim 1 or 8, characterized in that the lower end of the air-inlet tubes (13) is made up of a mantle (23).

10. Machine according to claim 8, characterized in that the frame (1, 37) comprises wheels (3, 4 or 39, 40) which are adjustable in height.

11. Machine according to claim 9, characterized in that the mantle (23) is made up of flexible material.

12. Machine according to anyone of the preceding claims, characterized in that the air-inlet tubes (13) are provided with lateral openings (25) directed towards the direction of displacement of the plants.

13. Machine according to claim 4 or 6, characterized in that around the opening (29 or 48) of the deflector (12 or 44) are arranged guiding rods (30 or 49) which apply on the displaced plants.

14. Machine according to claim 13, characterized in that the guiding rods (30 or 49) are made up of spring-steel.

15. Machine according to claim 13 or 14, characterized in that the guiding rods (30 or 49) arranged above the opening (29 or 48) are fastened to an articulated support (31).

16. Machine according to anyone of the preceding claims, characterized in that the output of the blowers (11) is changeable.

17. Machine according to claim 16, characterized in that the blowers (11) comprise orientable paddles (22).

18. Machine according to claim 16, characterized in that the speed of rotation of the blowers (11) is changeable.

19. Machine according to anyone of the preceding claims, characterized in that it is provided with shutters (33, 50) allowing to close at least partly the tubes (13) of the blowers (11).

20. Machine according ot anyone of the preceding claims, characterized in that it comprises a separating device (36, 53) for the plants, on at least one of its sides.
